# EUROPEAN PATENT SPECIFICATION

(11) **EP 1 136 721 B1**
(45) Date of publication and mention of the grant of the patent: **02.03.2005**
(21) Application number: 01107286.5
(22) Date of filing: 23.03.2001
(51) Int. Cl.: F16F 15/26

(54) **Balancer shaft for an internal combustion engine**
Ausgleichswelle für eine Verbrennungskraftmaschine
Arbre d'équilibrage pour un moteur à combustion interne

(30) Priority: 24.03.2000 JP 2000084842; 24.03.2000 JP 2000084852
(43) Date of publication of application: 26.09.2001
(73) Proprietor: YAMAHA HATSUDOKI KABUSHIKI KAISHA, Iwata-shi Shizuoka-ken (JP)
(72) Inventor: Takano, Tomotaka, Iwata-Shi, Shizuoka-ken (JP); Okui, Kaoru, Iwata-Shi, Shizuoka-ken (JP); Matsuno, Yasuyuki, Iwata-Shi, Shizuoka-ken (JP)
(74) Representative: Grünecker, Kinkeldey, Stockmair & Schwanhäusser Anwaltssozietät

(56) References cited:
- EP-A- 0 076 358
- WO-A-01/33105
- JP-A- 11 002 290
- US-A- 1 225 355
- US-A- 4 480 607
- US-A- 4 509 378
- US-A- 4 819 505
- US-A- 5 044 333
- US-A- 5 253 547

## Description

This invention relates to a balancer shaft according to the preamble of claim 1.

In four-stroke cycle engines employing the valve drive device or mechanism of the overhead camshaft (OHC) type, the rotation of the crankshaft is transmitted usually through a chain transmission device or mechanism to the camshafts. As the camshafts rotate, intake and exhaust valves are opened and closed according to appropriate timing to exchange gas in the cylinder as required.

A type of internal combustion engine has been proposed in which the rotation of the crankshaft is transmitted to the camshafts through an intermediate shaft for the convenience of disposing auxiliary devices. In such an engine, the intermediate shaft is also used as a balancer shaft to reduce vibration.

While the rotation of the crankshaft can be transmitted through a gear, chain, timing belt, and the like to the balancer shaft to be driven for rotation, in case the method of transmitting the rotation of the crankshaft through the gear to the balancer shaft is employed, variation in the crankshaft torque is directly transmitted to the balancer shaft and causes problems such as noise and adverse effect on the durability of the balancer shaft. Such problems become more apparent when a large rotary moment is produced on the balance weight of the balancer shaft or when the balancer shaft drives auxiliary devices.

In the internal combustion engine employing the constitution of transmitting the crankshaft rotation through the balancer shaft to the camshafts, it is impossible, in order to make accurate the opening closing timing of the intake and exhaust valves, to employ a constitution in which a single gear is shifted on the balancer shaft.

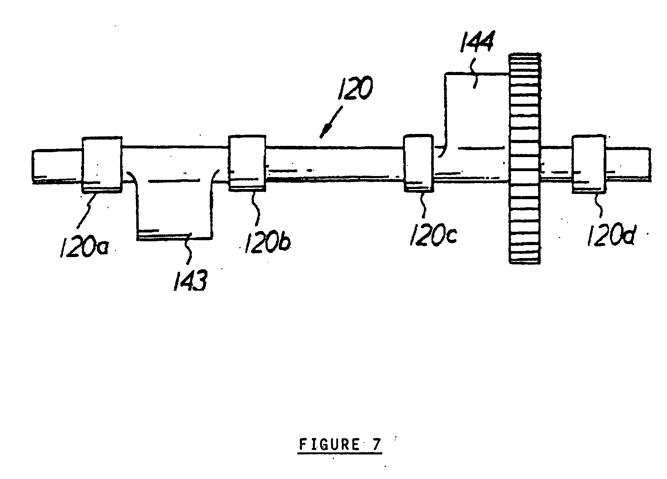

Referring to Fig.7, a conventional balancer shaft 120 is schematically illustrated. There has been a problem such that, since two balance weights 143, 144 are arranged each other at a phase difference of 180 degrees, as shown in the figure, loads applied on journal portions (bearing portions) 120a, 120b, 120c and 120d of the balancer shaft 120 are not uniform each other, causing the bearings (not shown) rotatably supporting the journal portions 120a-d to be ununiformly contacted therewith, which results in earlier abrasion

The balancer shaft is used for generating force couple and the position of each bearings must be therefore optimizes to prevent occurrence of such problems. Further, it is often required to design the diameter of the balancer shaft more than needs, for the purpose of the increase in the rigidity of the balancer shaft.

JP-11-0022990 A discloses a balancer shaft driven by a crankshaft of an internal combustion engine. Said balancer shaft comprises a weight portion including two balance weight portions and a non-weight portion including a gear driven by a crankshaft-gear. The two balance weight portions are arranged on both sides of a bearing portion of said balancer shaft.

US-5 044 333 A according to the precharacterising part of claim 1 discloses a balancer shaft including a gear driven by a crankshaft-gear of an engine and a hub portion supporting an eccentric balancer mass. A plurality of torsional springs are disposed between the gear and the eccentric balancer mass in order to provide some torsional vibration damping for the engine.

It is an objective of the present invention to provide a balancer shaft as indicated above having a high durability and providing a good engine performance.

According to the present invention this objective is solved by the features of claim 1.

Other preferred embodiments of the present invention are laid down in further dependent claims.

In the following, the present invention is explained in greater detail with respect to several embodiments thereof in conjunction with the accompanying drawings, wherein:
FIG. 1 is a vertical cross sectional view, showing an internal combustion engine provided with a balancer shaft of an embodiment;
FIG. 2 is a partially broken away view of the constitution of the auxiliary device drive mechanism and the cam-crank drive mechanism of the internal combustion engine;
FIG. 3 is a side view, partially broken away, of the balancer shaft (as seen along the line A-A in FIG. 4);
FIG. 4 is a front view, partially in cross section, of the balancer shaft;
FIG. 5 shows the section B-B in FIG. 4;
FIG. 6 is an exploded view of the balancer shaft; and
Fig.7 shows a conventional balancer shaft schematically illustrated.

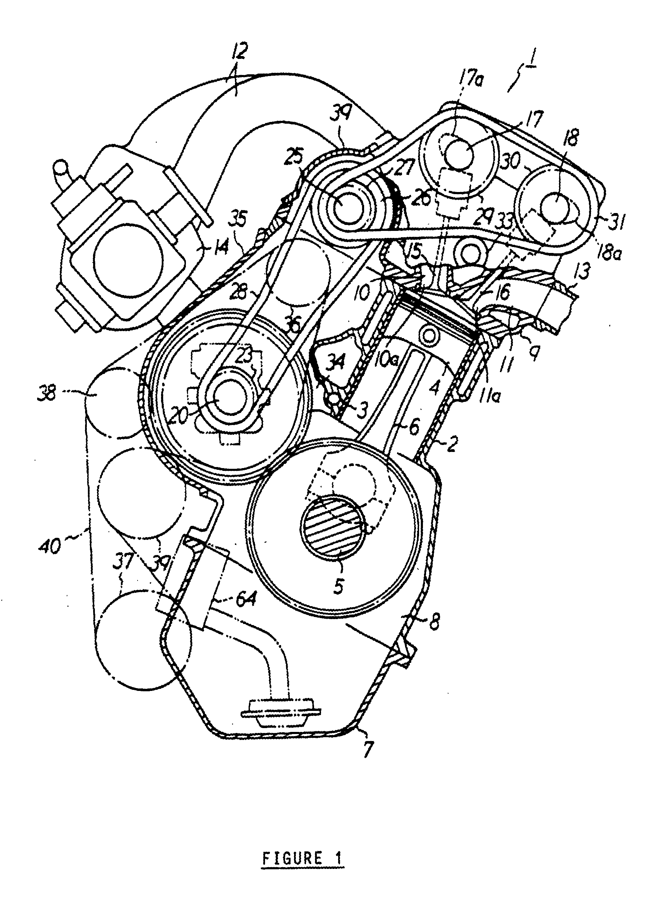

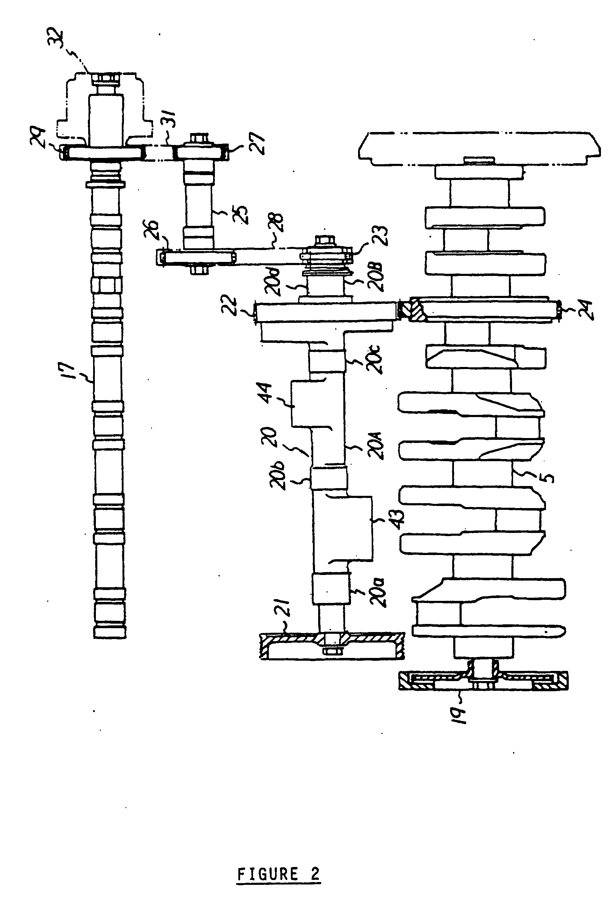

FIG. 1 shows a vertical cross section of an internal combustion engine provided with a balancer shaft according to the embodiment. FIG. 2 is a partially broken away view of the constitution of the auxiliary device drive mechanism or device and the cam-crank drive mechanism or device of the internal combustion engine.

An internal combustion engine 1 shown in FIG. 1 is a four-stroke cycle, in-line, 5-cylinder engine for automobiles, with its cylinder block 2 bored with five cylinders 3 side by side in a row vertical to the drawing surface and with a piston 4 inserted for sliding in each cylinder 3. The piston 4 is connected through a connecting rod 6 to a crankshaft 5 extending vertically to the drawing surface of FIG. 1. The crankshaft 5 is housed for free rotation in a crank chamber 8 formed with the cylinder block 2 and an oil pan 7 covering the cylinder block 2 from under.

As shown in FIG. 1, an intake passage 10 and an exhaust passage 11 for each cylinder are formed in the cylinder head 9 placed over the cylinder block 2. An intake manifold 12 communicating with the intake passages 10 and an exhaust manifold 13 communicating with the exhaust passages 11 are connected to the cylinder head 9. A surge tank 14 is attached to an end of the intake manifold 12.

The intake and exhaust passages 10 and 11 are opened to each cylinder 3 at the intake and exhaust ports 10a and 11a, respectively. The exhaust passage 11 is open at the exhaust port 11a to each cylinder 3. The intake and exhaust ports 10a and 11a are opened and closed according to appropriate timing respectively with an intake vale 15 and an exhaust valve 16. The intake and exhaust valves 15 and 16 are forced with valve springs (not shown) toward closing side, and are respectively abutted against cams 17a and 18a integrally formed on camshafts 17 and 18 extending vertically to the drawing surface of FIG. 1 and disposed for free rotation over the cylinder head 9. As the camshafts 17 and 18 are driven for rotation, the valves 15 and 16 open and close the intake and exhaust ports 10a and 11a according to appropriate timing to exchange gas as required.

As shown in FIG. 2, a crank damper 19 is attached to one end of the crankshaft 5. A balancer shaft 20 as a first intermediate shaft is disposed for free rotation in front (left in FIG. 1) and obliquely above, parallel to, and with a displacement toward the intake side from the crankshaft 5. An auxiliary devices drive pulley 21 is attached to one end of the side of the balancer shaft 20 where the crank damper 19 is disposed.

As shown also in FIG. 2, a large diameter gear 22 and a small diameter sprocket 23 are provided on the other side end of the balancer shaft 20, with the gear 22 engaging with a gear 24 of the same diameter secured to the middle part of the crankshaft 5.

On the other hand, a second intermediate shaft 25 is disposed for free rotation on the intake side of the cylinder head 9 and parallel to the crankshaft 5 and the balancer shaft 20. A sprocket 26 is attached to one end of the second intermediate shaft 25, and another sprocket 27 is attached to the other end of the second intermediate shaft 25. An endless chain 28 is placed around the sprockets 26 and 23.

Sprockets 29 and 30 are attached respectively to the ends of the camshafts 17 and 18. An endless chain 31 is routed around the sprockets 29, 30, and 27. As shown in FIG. 2, a WT (hydraulic type variable valve timing device) 32 is attached to an end of the camshaft 17 of the intake side. As shown in FIG. 1, a sprocket 33 connected to an input shaft of a water pump (not shown) is pressed from the outside and engaged with the chain 31.

As shown in FIG. 1, the chains 28 and 31 are disposed on the outer side (intake side) of the cylinder 3 so that they do not overlap with (or does not cross) the cylinder 3 as seen in the axial direction of the crankshaft 5. As shown in FIG. 2, the chains 28 and 31 are disposed within the length of the crankshaft 5.

As shown in FIG. 1, a balancer shaft chamber 34 is formed to accommodate the balancer shaft 20. The balancer shaft chamber 34 is open through an opening formed in the side wall on the intake side of the cylinder block 2. The opening is covered with a removable cover 35.

In this internal combustion engine 1 shown in FIG. 1, an alternator 36 and an air-conditioner compressor 37 are disposed on one side (deeper side in FIG. 1) of the intake side. An endless belt 40 is routed around these components, an idler pulley 38 and a tension pulley 39. In this embodiment, a power steering pump (not shown) is directly connected to an end of the second intermediate shaft 25.

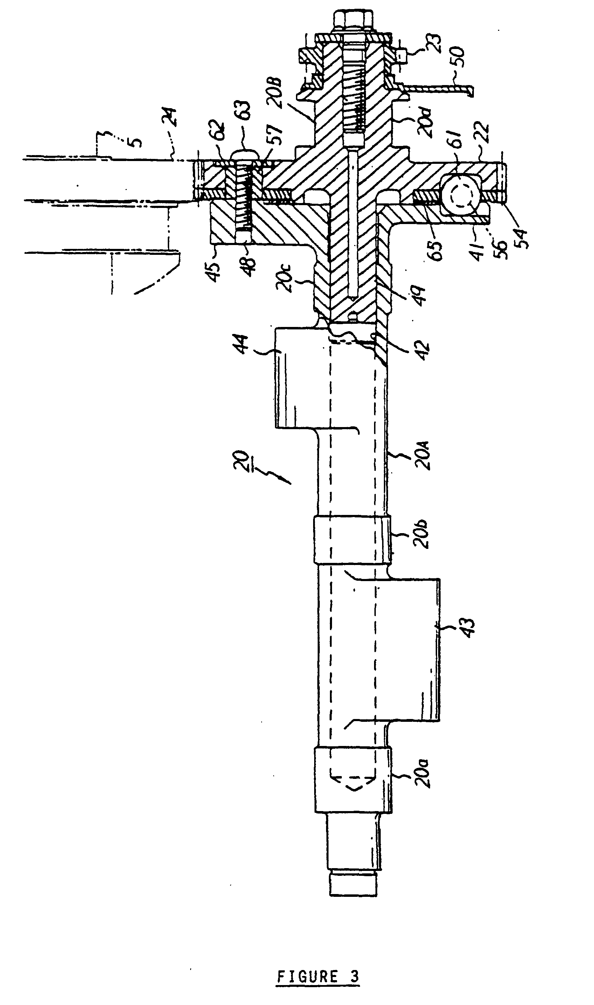

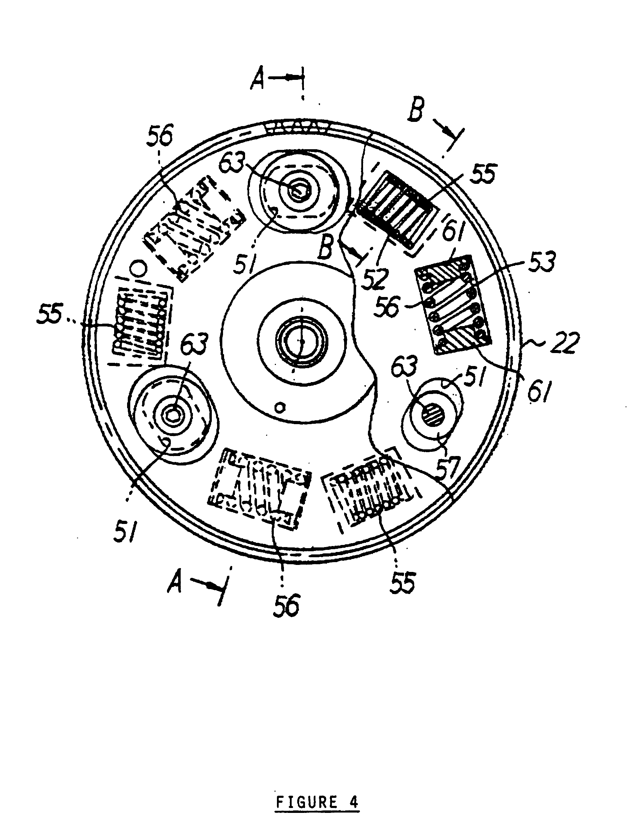

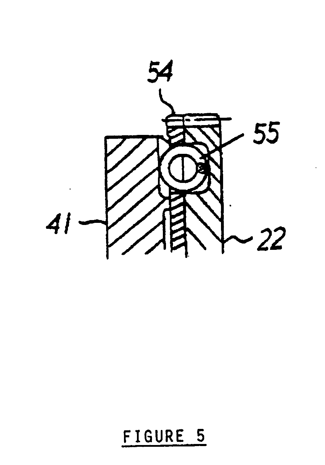

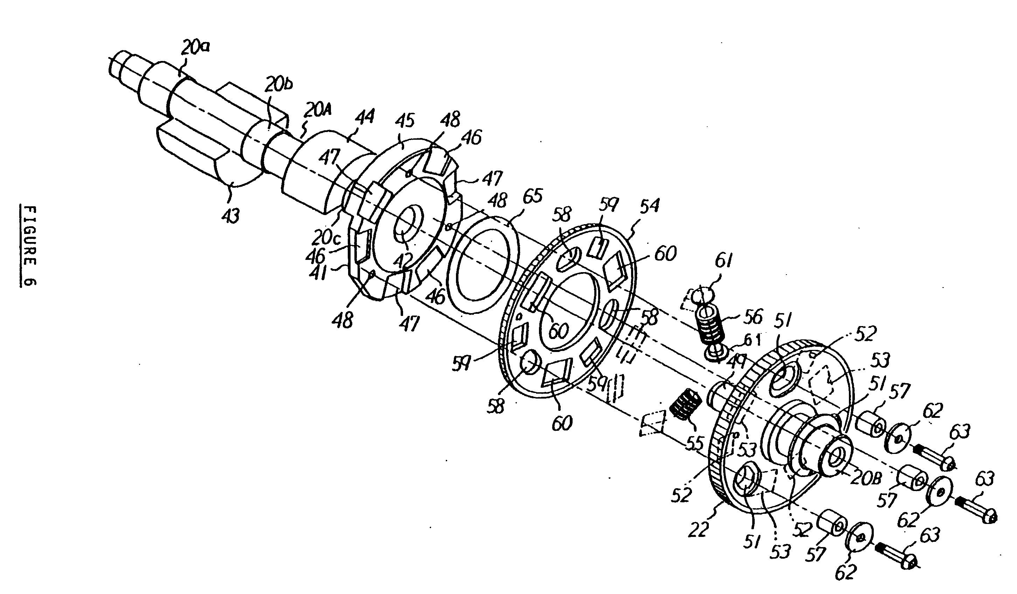

Here, the constitution of the balancer shaft 20 is described in detail in reference to FIGs. 3 to 6. FIG. 3 is a partially sectional side view of the balancer shaft (as seen along the line A-A in FIG. 4). FIG. 4 is a partially sectional front view of the balancer shaft. FIG. 5 shows the section B-B in FIG. 4. FIG. 6 is an exploded perspective view of the balancer shaft.

In this embodiment as shown in FIG. 3, the balancer shaft 20 is divided into a long-sized weight portion 20A and a short-sized non-weight portion 20B other than the weight portion 20A. A flange 41 is formed integrally with one end of the weight portion 20A, opposite to the non-weight portion 20B. A fitting hole 42 is formed in the center of the weight portion 20A.

The outside round surface of the weight portion 20A of the balancer shaft 20 has three journal or bearing portions 20a, 20b, and 20c formed integrally with and at appropriate axial intervals on the shaft 20. A semi-cylindrical balance weight (balance weight portion) 43 is integrally formed between the journal portions 20a and 20b. Balance weights (balance weight portions) 44 and 45 are integrally formed with a phase difference of 180 degrees from the balance weight 43 on both sides of the journal portion 20c. Here, the semi-cylindrical balance weight 44 is formed integrally with the outside round surface of the weight portion 20A, while the (other) balance weight 45 is formed integrally with the flange 41. Both balance weights are arranged so that the distances between the centers of the balance weights 44 and 45 and the journal portion 20c are approximately equal.

In this embodiment, a balance weight opposite the balance weight 43 is divided into two balance weight portions 44 and 45, which are in turn located on right and left sides of the journal portion 20c and at approximately equal distance therefrom. The two balance weight portions 44 and 45 constitute the balance weight opposite to the balance weight 43. Thus, between each adjoining two journals or bearings are arranged the balance weight portions 43, 44 and 45, respectively. In other words, the balance weight 43 is positioned between journal or bearing portions 20a and 20b, the balance weight 44 between 20b and 20c, and the balance weight 45 between 20c and 20d. The balance weight 43 is substantially constituted by a single portion.

As shown in FIG. 6, two kinds of rectangular grooves (recesses) 46 and 47, three of each kind, at equal angular intervals (120 degree pitches), are provided alternately in the outside end surface of the flange 41 formed integrally with an end portion of the weight portion 20A. Said two kinds of grooves or recesses 46 and 47 have generally square shape. The end surface of the flange 41 is also provided with three bolt holes 48 at equal angular intervals (equal angular pitches). Said three bolt holes or through holes 48 are provided for receiving and fastening bolts 63.

On the other hand, the non-weight portion 20B of the balancer shaft 20 has the integrally formed gear 22 at its axially middle part; an integrally-formed, small-diameter fitting shaft portion 49 extending forward (left in FIG. 3); and a journal portion 20d behind the gear 22. The sprocket 23 and a crank timing adjusting plate 50 are attached to an end portion of the non-weight portion 20B.

As shown in FIG. 6, three openings (elongated holes) 51 elongate in the circumferential direction are formed through the gear 22 at equal angular pitches. Two kinds of rectangular grooves (recesses) 52 and 53, three of each kind, at equal angular pitches, are provided alternately in the end surface of the gear 22, opposite the flange 41, of the weight portion 20A.

As shown in FIG. 3, the balancer shaft 20 is assembled by fitting the fitting shaft portion 49 formed with the non-weight portion 20B into the fitting hole 42 in the weight portion 20A, and by interconnecting the flange 41 of the weight portion 20A and the gear 22 of the non-weight portion 20B. A ring-like scissors gear 54 engaging with the gear 24 on the crankshaft 5 side and a coned disc spring 65 are interposed between the flange 41 and the gear 22. Two kinds of coil springs 55 and 56, and cylindrical spacers 57, three pieces for each, are interposed among the flange 41 and the gear 22 and the scissors gear 54. The scissors gear 54 is for reducing noise by eliminating the backlash produced when the gear 22 engages with the gear 24 on the crankshaft 5 side. The scissors gear 54 is normally biased in one rotative direction by a coil spring. Without the backlash, the rotation of the crankshaft 5 is accurately transmitted to the balancer shaft 20. The scissors gear 54 is urged in one direction with the coil springs 55. As shown in FIG. 6, elongate holes 58 and rectangular holes (square holes or recesses) 59 and 60, three of each, are alternately formed at equal angular pitches through the scissors gear 54.

In the state of the balancer shaft 20 being assembled as shown in FIG. 3, in each of the rectangular spaces formed with the grooves 46, 47 formed in the flange 41 of the weight portion 20A, the rectangular holes 59, 60 through-formed in the scissors gear 54, and the grooves 52, 53 formed in the gear 22 of the non-weight portion 20B, the coil springs 55 and 56 are installed and arranged in the circumferential direction as shown in FIGs. 4 and 5. Caps 61 are fitted over the both ends of each coil spring 56.

The balancer shaft 20 is assembled as follows: In the state of the coil springs 55 and 56 being installed in the respective spaces, washers 62 are placed on the end surfaces of the spacers 57; bolts 63 are passed through the spacers 57, the washers 62, and the elongate holes 51, 58 formed through the gear 22 and the scissors gear 54, and screwed into the bolt hole 48 formed in the flange 41, so that the weight portion 20A and the non-weight portion 20B are joined together into a single body as the flange 41, the gear 22, and the scissors gear 54 are joined together.

Said bolts 63, spacers 57 and washers 62 are forming a bolt means. Said bolt means is fixing the gear means (gear 22 and scissors gear 54) to the flange 41 such that an axial motion in axial direction of the balancer shaft 20 is prevented. Due to the elongated holes 51 and 58 a relative motion in rotational direction between the flange 41 and the gears 22,54 is possible within a predetermined range in accordance with the length of said elongated holes 51,58.

In the assembled state of the balancer shaft 20 as described above, the coil springs 55 and 56, and the spacers 57 are interposed among the flange 41 of the weight portion 20A, the gear 22 of the non-weight portion 20B, and the scissors gear 54 interposed between the former two. Therefore, the weight portion 20A and the non-weight portion of the balancer shaft 20 can make relative rotation within the movable range of the spacers 57 in the elongate holes 51, 58 according to the compressive deformation of the coil springs 56 constituting a damper means. As the elastic deformation of the coil springs 56 provides intended damper effect, variation in the torque of the crankshaft 5 is absorbed as described later.

With the constitution described above, when the engine 1 starts to rotate the crankshaft 5, the rotation of the crankshaft is transmitted to the balancer shaft 20 through the gears 24 and 22 of identical diameters, so that the balancer shaft 20 rotates at the same speed as that of the crankshaft 5. However, since this embodiment is arranged that the balancer shaft 20 is divided into the weight portion 20A and the non-weight portion 20B, and that the coil springs 56 constituting damper means are interposed there between, variation in the torque of the crankshaft 5 is absorbed with the damping effect of the coil spring 56 and is not transmitted to the balancer shaft 20. As a result, the variation in the torque of the crankshaft 5 is not transmitted to the balancer shaft side. Thus, noise is reduced and the durability of the balancer shaft 20 is improved.

The rotation of the balancer shaft 20 is transmitted through the auxiliary device drive pulley 21 and the belt 40 to the alternator 36 and the air-conditioner compressor 37 to drive them for rotation. Incidentally, as shown in FIG. 1, the engine 1 is provided with an oil pump 64 as an auxiliary device. The rotation of the balancer shaft 20 is transmitted though a transmitting mechanism (not shown) to the oil pump 64, so that it is driven to supply oil to various parts of the engine 1.

The rotation of the balancer shaft 20 is also transmitted to the second intermediate shaft 25 at a reduced speed through the sprocket 23, chain 28, and the sprocket 26, to drive a power steering pump (not shown) directly connected to the second intermediate shaft 25. The rotation of the second intermediate shaft 25 is transmitted to the camshafts 17 and 18 at a further reduced speed through the sprocket 27, the chain 31, and the sprockets 29, 30. As the camshafts 17 and 18 are rotated, as already described, the intake and exhaust ports 10a and 11a are opened and closed by the intake and exhaust valves 15 and 16 according to appropriate timing to exchange gas as required. The movement of the chain 31 also rotates the sprocket 33 to drive the water pump (not shown), so that cooling water is circulated through the engine 1. Incidentally, since the sprocket 23 in this embodiment is disposed near the journal portion 20d formed on one end of the balancer shaft 20, vibration of the sprocket 23 is held small, so that the rotation of the balancer shaft 20 is accurately and reliably transmitted to the camshafts 17 and 18 through the second intermediate shaft 25.

In this embodiment, since the gear 22 and the sprocket 23 are provided on the non-weight portion 20B of the balancer weight 20, rotation of the crankshaft 5 is transmitted to the non-weight portion 20B not through the coil springs 56 constituting damper means but through the gear 22. The rotation of the non-weight portion 20B is transmitted to the second intermediate shaft 25 through the sprocket 23, the chain 28, and the sprocket 26. The rotation of the second intermediate shaft 25 is transmitted to the camshafts 17 and 18 through the sprocket 27, the chain 31, and the sprockets 29, 30. As a result, rotation of the crankshaft 5 is accurately transmitted to the camshafts 17 and 18 without phase difference between the two camshafts, and so there is no inaccuracy in opening and closing timing of the intake and exhaust valves 15, 16 driven with the camshafts 17 and 18.

In the above embodiment, while the coil springs are used as the damper means, any other shock absorbing materials including resilient materials such as rubber may be used as the damper means.

The embodiment described above teaches an internal combustion engine having a balancer shaft rotatably driven with the crankshaft, the balancer shaft is divided into a weight portion and a non-weight portion other than the weight portion, and a damper means is interposed between the two portions.

Accordingly, since the variation in the crankshaft torque is effectively absorbed with the damper effect of the damper means interposed between the weight portion and the non-weight portion other than the weight portion of the balancer shaft, effects are provided that the variation in the crankshaft torque is not transmitted to the balancer shaft, that noise is reduced, and that durability of the balancer shaft, etc. is improved.

A gear for inputting the rotation of the crankshaft and a sprocket for transmitting the rotation to camshafts are provided on the non-weight portion of the balancer shaft.

Accordingly, since the rotation of the crankshaft is transmitted to the non-weight portion of the balancer shaft not through the damper means but through the gear, and rotation of the non-weight portion is transmitted to the camshaft through the sprockets and the chain, rotation of the crankshaft is accurately transmitted to the camshafts without phase difference between both shafts. As a result, an effect is obtained that inaccuracy in opening and closing timing of the intake and exhaust valves is prevented from occurring.

A scissors gear is installed in the gear provided on the balancer shaft.

Accordingly, since the scissors gear is installed in the gear provided on the balancer shaft, backlash is not produced between the gear on the balancer shaft side and the gear on the crankshaft side. As a result, an effect is obtained that rotation of the crankshaft is accurately transmitted to the balancer shaft.

As is clear from the above description, the balancer shaft arrangement of an internal combustion engine is provided with a balancer shaft driven for rotation with a crankshaft the variation in the crankshaft, since at least one of the balance weights mounted on the balancer shaft is divided into two, which are in turn arranged to mount on both sides of a journal portion, effects are provided that loads applied on respective bearings at a plurality of journal portions are approximately equal each other and thus ununiform contact of the bearings and early abrasion associated therewith can be effectively prevented.

The embodiment described above teaches an internal combustion engine having a balancer shaft rotatably driven with the crankshaft, at least one of a plurality of balance weights mounted on the balancer shaft is divided into two balance weights which are arranged on both sides of a journal portion.

Accordingly, since at least one of the balance weights mounted on a balancer shaft is divided into two which are in turn arranged on both sides of the journal portion, the force couple generated in these balance weights can be distributed and therefore the loads applied on respective journal portions are approximately equal, thereby to effectively prevent ununiform contact of the bearings as well as abrasion associated with such ununiform contact.

In this embodiment, since two divided balance weight portions 44, 45 are disposed on both sides of the journal portion 20c of the balancer shaft 20 and approximately equal distance from the journal portion 20c, the force couple generated in these balance weights 44, 45 can be distributed and therefore the loads applied on respective joumal portions 20a to 20d are approximately equal, thereby to effectively prevent ununiform contact of the bearings (not shown) rotatably supporting the journal portion 20a to 20d, as well as abrasion associated with such ununiform contact. Each of the balance weight portions is arranged between the adjoining journal portions.

It is an advantage of the embodiment to provide a balancer shaft of an internal combustion engine that makes it possible to reduce noise and improve the durability of the balancer shaft system by shutting off the transmission of crankshaft torque variation to the balancer shaft.

It is a further advantage of the embodiment to provide a balancer shaft of an internal combustion engine that makes it possible to shut off the transmission of crankshaft torque variation to the balancer shaft without causing inaccuracy in the opening-closing timing of intake and exhaust valves.

While the above description relates to an embodiment in which the invention is applied specifically to the balancer shaft of a five-cylinder engine, the embodiment may likewise be applied to the balancer shaft of any other type of engine provided with the balancer shaft driven with the crankshaft.

According to the embodiment it is advantageous to provide balancer shaft with at least one balance weight portion 43, 44, 45 for an internal combustion engine, said balancer shaft 20 is rotationally driven by a crankshaft 5 of said engine, wherein the balancer shaft 20 comprises a weight portion 20A and a non-weight portion 20B, wherein a damper means 56 is interposed between said weight portion 20A and said non-weight portion 20B. It is further advantageous to provide balancer shaft with at least one balance weight portion 43, 44, 45 for an internal combustion engine, said balancer shaft 20 is rotationally driven by a crankshaft 5 of said engine, wherein said balancer shaft (20) comprises at least two balance weight portions (44, 45) which are constituting a balance weight, said balance weight portions (44, 45) are arranged on both sides of a bearing portion (20c) of said balancer shaft (20).

Each of the above mentioned combinations of features of the balancer shaft according to the embodiment can provide an improved arrangement. The embodiment described above teaches al of said features. Thus, respective combination of the above combined features can also provide an improved arrangement.

According to the embodiment the non-weight portion 20B of the balancer shaft 20 is provided with a gear means 22, 54 driven in accordance with a rotation of the crankshaft 5. Said gear means 22, 54 is attached to a flange 41 of the weight portion 20A of the balancer shaft 20, wherein one of the balance weight portion 45 is integrally formed with said flange 41. Said damper means 56 is provided between said gear means 22, 54 and said flange 41.

Said flange 41 is provided with recesses 46, 47 facing said gear means 22, 54, and said gear means 22, 54 is provided with recesses 52, 53, 59, 60 facing said recesses 46, 47 of the flange. At least one elastic member 56 is accommodated within at least one of associated recesses of the flange 41 and the gear means 22, 54. Said elastic member 56 serves as the damper means in rotational direction.

Said gear means comprises a gear 22 and a scissors gear 54 coupled with said gear 20, wherein said scissors gear 54 is pre-tensioned in rotational direction with regard to the gear 22. Said scissors gear 54 is rotatably supported on said balancer shaft 20 coaxially with said gear 22, wherein at least one elastic member 55 is accommodated within recesses 52, 53, 59, 60 provided in said gear 22 and said scissors gear 54 and associated with each other for pre-tensioning the scissors gear 54 in rotational direction with regard to the gear 22. Said gear means 22, 54 is provided with at least one elongated hole 51, 58 accommodating a bolt means 57, 62, 63 for axially fixing said gear means 22, 54 to said flange 41 and allowing a relative rotational movement between said gear means 22, 54 and said flange 41 within a predetermined range.

The non-weight portion 20B of the balancer shaft 20 is provided with a sprocket 23 driven in accordance with a rotation of the crankshaft 5, wherein said sprocket 23 is provided for transmitting the rotation to camshafts 17, 18 of the engine. The non-weight portion 20B is provided with a fitting shaft portion 49 rotatable supported within a fitting hole 42 of the weight portion 20A, wherein a bearing portion 20c of the weight portion 20A surrounds said fitting shaft portion 49.

Said two balance weight portions 44, 45 are arranged on both sides of a bearing portion 20c which surrounds said fitting shaft portion 49.

Each of said balance weight portions 43, 44, 45 is arranged between adjoining bearing portions 20a, 20b, 20c, 20d of the balancer shaft 20.

## Claims

1. Balancer shaft with at least one balance weight portion (43, 44, 45) for an internal combustion engine, said balancer shaft (20) suitable for being rotationally driven by a crankshaft (5) of said engine, the balancer shaft (20) comprising a weight portion (20A) and a non-weight portion (20B), wherein a damper means (56) is interposed between said weight portion (20A) and said non-weight portion (20B) and wherein the non-weight portion (20B) of the balancer shaft (20) is provided with a gear means (22, 54) to be driven in accordance with a rotation of the crankshaft (5).
**characterized in that**
the non-weight portion (20B) of the balancer shaft (20) is provided with a sprocket (23) to be driven in accordance with a rotation of the crankshaft (5), wherein said sprocket (23) is provided for transmitting the rotation to camshafts (17, 18) of the engine.

2. Balancer shaft according to claim 1,
**characterized in that**
said balancer shaft (20) comprises at least two balance weight portions (44, 45) which are constituting a balance weight, said balance weight portions (44, 45) are arranged on both sides of a bearing portion (20c) of said balancer shaft (20).

3. Balancer shaft according to claim 2, **characterized in that** said gear means (22, 54) is attached to a flange (41) of the weight portion (20A) of the balancer shaft (20), wherein one (45) of the balance weight portions (44, 45) is integrally formed with said flange (41).

4. Balancer shaft according to claim 3, **characterized in that** said damper means (56) is provided between said gear means (22, 54) and said flange (41).

5. Balancer shaft according to claim 3 or 4, **characterized in that** said flange (41) is provided with recesses (46, 47) facing said gear means (22, 54), and said gear means (22, 54) is provided with recesses (52, 53, 59, 60) facing said recesses (46, 47) of the flange, wherein at least one elastic member (56) is accommodated within at least one of associated recesses of the flange (41) and the gear means (22, 54), said elastic member (56) serves as the damper means in rotational direction.

6. Balancer shaft according to at least one of the claims 3 to 5, **characterized in that** said gear means comprises a gear (22) and a scissors gear (54) coupled with said gear (20), wherein said scissors gear (54) is pre-tensioned in rotational direction with regard to the gear (22).

7. Balancer shaft according to claim 6, **characterized in that** said scissors gear (54) is rotatably supported on said balancer shaft (20) coaxially with said gear (22), wherein at least one elastic member (55) is accommodated within recesses (52, 53, 59, 60) provided in said gear (22) and said scissors gear (54) and associated with each other for pre-tensioning the scissors gear (54) in rotational direction with regard to the gear (22).

8. Balancer shaft according to at least one of the claims 3 to 7, **characterized in that** said gear means (22, 54) is provided with at least one elongated hole (51, 58) accommodating a bolt means (57, 62, 63) for axially fixing said gear means (22, 54) to said flange (41) and allowing a relative rotational movement between said gear means (22, 54) and said flange (41) within a predetermined range.

9. Balancer shaft according to at least one of the claims 1 to 8, **characterized in that** the non-weight portion (20B) is provided with a fitting shaft portion (49) rotatable supported within a fitting hole (42) of the weight portion (20A), wherein a bearing portion (20c) of the weight portion (20A) surrounds said fitting shaft portion (49).

10. Balancer shaft according to claim 9, **characterized in that** said two balance weight portions (44, 45) are arranged on both sides of a bearing portion (20c) which surrounds said fitting shaft portion (49).

11. Balancer shaft according to at least one of the claims 2 to 10, **characterized in that** each of said balance weight portions (43, 44, 45) is arranged between adjoining bearing portions (20a, 20b, 20c, 20d) of the balancer shaft (20).

## Patentansprüche

1. Ausgleichswelle mit zumindest einem Ausgleichsgewichtsabschnitt (43, 44, 45) für eine Brennkraftmaschine, wobei die Ausgleichswelle (20) geeignet ist, um durch eine Kurbelwelle (5) des Motors drehend angetrieben zu werden, die Ausgleichswelle (20) einen Gewichtsabschnitt (20A) und einen Nicht- Gewichtsabschnitt (20B) aufweist, eine Dämpfungseinrichtung (56) zwischen den Gewichtsabschnitt (20A) und den Nicht- Gewichtsabschnitt (20B) eingesetzt ist und wobei der Nicht- Gewichtsabschnitt (20B) der Ausgleichswelle (20) mit einer Zahnradeinrichtung (22, 54) versehen ist, um in Übereinstimmung mit der Drehung der Kurbelwelle (5) angetrieben zu werden,
**dadurch gekennzeichnet, dass**
der Nicht- Gewichtsabschnitt (20B) der Ausgleichswelle (20) mit einem Kettenrad (23) versehen ist, um in Übereinstimmung mit einer Drehung der Kurbelwelle (5) angetrieben zu werden, wobei das Kettenrad (23) vorgesehen ist, die Drehung zu den Nockenwellen (17, 18) des Motors zu übertragen.

2. Ausgleichswelle nach Anspruch 1,
**dadurch gekennzeichnet, dass**
die Ausgleichswelle (20) zumindest zwei Ausgleichsgewichtsabschnitte (44, 45) aufweist, die ein Ausgleichsgewicht bilden, wobei die Ausgleichsgewichtsabschnitte (44, 45) auf beiden Seiten eines Lagerabschnittes (20c) der Ausgleichswelle (20) angeordnet sind.

3. Ausgleichswelle nach Anspruch 2, **dadurch gekennzeichnet, dass** die Zahnradeinrichtung (22, 54) mit einem Flansch (41) des Gewichtsabschnittes (20A) der Ausgleichswelle (20) verbunden ist, wobei einer (45) der Ausgleichsgewichtsabschnitte (44, 45) mit dem Flansch (41) einstückig gebildet ist.

4. Ausgleichswelle nach Anspruch 3, **dadurch gekennzeichnet, dass** die Dämpfereinrichtung (56) zwischen der Zahnradeinrichtung (22, 54) und dem Flansch vorgesehen ist.

5. Ausgleichswelle nach Anspruch 3 oder 4, **dadurch gekennzeichnet, dass** der Flansch (41) mit Aussparungen (46, 47) versehen ist, die der Zahnradeinrichtung (22, 54) zugewandt sind und die Zahnradeinrichtung (22, 54) mit Aussparungen (52, 53, 59, 60) versehen ist, die den Aussparungen (46, 47) des Flansches zugewandt sind, wobei zumindest ein elastisches Teil (56) innerhalb zumindest einer der zugehörigen Aussparungen. des Flansches (41) oder der Zahnradeinrichtung (22, 54) untergebracht ist, das elastische Teil- (56) als die Dämpfungseinrichtung in der Drehrichtung dient.

6. Ausgleichswelle nach zumindest einem der Ansprüche 3 bis 5, **dadurch gekennzeichnet, dass** die Zahnradeinrichtung aufweist ein Zahnrad (22) und ein Scherenzahnrad (54) ist in der Drehrichtung in Bezug auf das Zahnrad (22) vorgespannt.

7. Ausgleichswelle nach Anspruch 6, **dadurch gekennzeichnet, dass** das Scherenzahnrad (54) ist auf der Ausgleichswelle (20) drehbar gelagert, koaxial mit dem Zahnrad (22), wobei zumindest ein elastisches Teil (55) innerhalb der Aussparungen (52, 53, 59, 60), vorgesehen in dem Zahnrad (22) und dem Scherenzahnrad (54) oder aufgenommen und miteinander in Verbindung ist, um das Scherenzahnrad (54) in Drehrichtung in Bezug auf das Zahnrad (22) vorzuspannen.

8. Ausgleichswelle nach zumindest einem der Ansprüche 3 bis 7, **dadurch gekennzeichnet, dass** die Zahnradeinrichtung (22, 54) versehen ist mit zumindest einem Langloch (51, 58), die eine Schraubeneinrichtung (57, 62, 63) zum axialen Befestigen der Zahnradeinrichtung (22, 54) an dem Flansch aufnimmt und die eine relative Drehbewegung zwischen der Zahnradeinrichtung (22, 54) und dem Flansch (41) innerhalb eines vorbestimmten Bereiches gestattet.

9. Ausgleichswelle nach zumindest einem der Ansprüche 1 bis 8, **dadurch gekennzeichnet, dass** der Nicht- Gewichtsabschnitt (20B) mit einem Passwellenabschnitt (49) drehbar gelagert innerhalb einer Einsetzbohrung (42) des Gewichtsabschnittes (20A), versehen ist, wobei ein Lagerabschnitt (20c) des Gewichtsabschnittes (20A) den Passwellenabschnitt (49) umgibt.

10. Ausgleichswelle nach Anspruch **9, dadurch gekennzeichnet, dass** die zwei Ausgleichsgewichtsabschnitte (44, 45) auf beiden Seiten eines Lagerabschnittes (20c) angeordnet sind; der den Passwellenabschnitt (49) umgibt.

11. Ausgleichswelle nach zumindest einem der Ansprüche 2 bis 10, **dadurch gekennzeichnet, dass** jeder der Ausgleichsgewichtsabschnitte (43, 44, 45) zwischen anliegenden Lagerabschnitten (20a, 20b, 20c, 20d) der Ausgleichswelle (20) angeordnet ist.

## Revendications

1. Arbre d'équilibrage comportant au moins une partie de masse d'équilibrage (43, 44, 45) pour un moteur à combustion interne, ledit arbre d'équilibrage (20) étant approprié à être entraîné en rotation par un vilebrequin (5) dudit moteur, l'arbre d'équilibrage (20) comprenant une partie de masse (20A) et une partie de non masse (20B) , dans lequel un moyen amortisseur (56) est interposé entre ladite partie de masse (20A) et ladite partie de non masse (20B) et dans lequel la partie de non masse (20B) de l'arbre d'équilibrage (20) est pourvue d'un moyen d'engrenage (22, 54) destiné à être entraîné conformément à la rotation du vilebrequin (5),
**caractérisé en ce que**
la partie de non masse (20B) de l'arbre d'équilibrage (20) est pourvue d'une roue dentée (23) destinée à être entraînée conformément à la rotation du vilebrequin (5), dans lequel ladite roue dentée (23) est prévue pour transmettre la rotation à des arbres à cames (17,18) du moteur.

2. Arbre d'équilibrage selon la revendication 1, **caractérisé en ce que**
ledit arbre d'équilibrage (20) comprend au moins deux parties de masse d'équilibrage (44, 45) qui constituent une masse d'équilibrage, lesdites parties de masse d'équilibrage (44, 45) étant agencées sur les deux côtés d'une partie portante (20C) dudit arbre d'équilibrage (20).

3. Arbre d'équilibrage selon la revendication 2, **caractérisé en ce que** lesdits moyens d'engrenage (22, 54) sont attachés à un flasque (41) de la partie de masse (20A) de l'arbre d'équilibrage (20), dans lequel l'une (45) des parties de masse d'équilibrage (44, 45) est solidairement formée avec ledit flasque (41).

4. Arbre d'équilibrage selon la revendication 3, **caractérisé en ce que** ledit moyen amortisseur (56) est disposé entre lesdits moyens d'engrenage (22, 54) et ledit flasque (41).

5. Arbre d'équilibrage selon la revendication 3 ou 4, **caractérisé en ce que** ledit flasque (41) est pourvu d'évidements (46, 47) en regard desdits moyens d'engrenage (22, 54), et lesdits moyens d'engrenage (22, 54) sont pourvus d'évidements (52, 53, 59, 60) en regard desdits évidements (46, 47) du flasque, dans lequel au moins un organe élastique (56) est logé au sein d'au moins un des évidements associés du flasque (41) et des moyens d'engrenage (22, 54), ledit organe élastique (56) servant de moyen amortisseur dans le sens de rotation.

6. Arbre d'équilibrage selon l'une quelconque des revendications 3 à 5, **caractérisé en ce que** lesdits moyens d'engrenage comprennent un engrenage (22) et un engrenage à ciseaux (54) couplé audit engrenage (20), dans lequel ledit engrenage à ciseaux (54) est prétendu en direction de rotation par rapport à l'engrenage (22).

7. Arbre d'équilibrage selon la revendication 6, **caractérisé en ce que** ledit engrenage à ciseaux (54) est supporté avec faculté de rotation sur ledit arbre d'équilibrage (20) coaxialement avec ledit engrenage (22) , dans lequel au moins un organe élastique (55) est logé au sein des évidements (52, 53, 59, 60) disposés dans ledit engrenage (22) et ledit engrenage à ciseaux (54) et associés l'un à l'autre pour pré-tendre l'engrenage à ciseaux (54) en direction de rotation par rapport à l'engrenage (22).

8. Arbre d'équilibrage selon l'une quelconque des revendications 3 à 7, **caractérisé en ce que** lesdits moyens d'engrenage (22, 54) sont pourvus d'au moins un trou allongé (51, 58) logeant des moyens de boulon (57, 62, 63) destinés à fixer axialement lesdits moyens d'engrenage (22, 54) audit flasque (41) et à permettre un mouvement de rotation relatif entre lesdits moyens d'engrenage (22, 54) et ledit flasque (41) dans une plage prédéterminée.

9. Arbre d'équilibrage selon l'une quelconque des revendications 1 à 8, **caractérisé en ce que** la partie de non masse (20B) est pourvue d'une partie d'arbre d'ajustement (49) rotative supportée au sein d'un trou d'ajustement (42) de la partie de masse (20A), dans lequel une partie portante (20c) de la partie de masse (20A) entoure ladite partie d'arbre d'ajustement (49).

10. Arbre d'équilibrage selon la revendication 9, **caractérisé en ce que** lesdites deux parties de masse d'équilibrage (44, 45) sont agencées sur les deux côtés d'une partie portante (20c) qui entoure ladite partie d'arbre d'ajustement (49).

11. Arbre d'équilibrage selon au moins une des revendications 2 à 10, **caractérisé en ce que** chacune desdites parties de masse d'équilibrage (43, 44, 45) est agencée entre des parties portantes attenantes (20a, 20b, 20c, 20d) de l'arbre d'équilibrage (20).
